# EUROPEAN PATENT SPECIFICATION

(11) **EP 0 958 480 B1**
(45) Date of publication and mention of the grant of the patent: **20.12.2000**
(21) Application number: 97934796.0
(22) Date of filing: 07.08.1997
(51) Int. Cl.: F27D 5/00, B22F 3/10

(54) **METHOD FOR THE PRODUCTION OF A SINTERED PLATE/SUBSTRATE AND SUBSTRATE TO BE USED WHEN HEATING CERAMIC PRODUCTS**
VERFAHREN ZUR HERSTELLUNG EINER SINTERNPLATTE/SUBSTRAT UND SEINER ANWENDUNG ZUM HEISSEN VON KERAMISCHEN ARTIKELN
PROCEDE DE PRODUCTION D'UN SUBSTRAT/PLAQUE FRITTE ET SUBSTRAT A UTILISER LORSQUE L'ON CHAUFFE DES PRODUITS CERAMIQUES

(30) Priority: 07.08.1996 NL 1003755
(43) Date of publication of application: 24.11.1999
(73) Proprietor: Stichting Energieonderzoek Centrum Nederland(ECN), 1755 LE Petten (NL)
(72) Inventor: BERKEVELD, Louis, David, NL-1871 BB Schoorl (NL); HUIBERTS, Roeland, Cornelis, NL-1742 NA Schagen (NL); HEERE, Petrus, Gerardus, Theodorus, NL-1934 PL Egmond aan Zee (NL)
(74) Representative: de Bruijn, Leendert C.
(86) International application number: NL9700458
(87) International publication number: WO9805914

(56) References cited:
- EP-A- 0 543 581
- EP-A- 0 639 436
- DE-A- 3 441 622
- DE-A- 4 206 007
- FR-A- 2 586 093
- GB-A- 2 216 115
- US-A- 4 693 918

## Description

The present invention relates to a method for the production of a sintered plate according to the preamble of claim 1.

A method of this type is disclosed in British Patent Application 2 216 1154 A. Plates produced using a method of this type are used for sintering industrial ceramic products, such as capacitors consisting of various layers, piezo-electric elements and fuel cell components. Plates of this type consisting of solid Al₂O₃ and ZrO₂ are used as the substrate on which the product to be sintered is placed and introduced into the furnace. For certain applications the relevant product to be sintered is covered by a second sintered plate in order thus to guarantee a more homogenous distribution of heat and/or in order to hold the product to be sintered in a certain shape or to bring it into such a shape.

Sintered plates of this type must satisfy a number of requirements, some of which are contradictory. For instance, it is necessary that the gases produced on heating the products to be sintered can as far as possible be discharged without hindrance. Such gases are produced as a result of the vaporisation of solvents, binders, plasticisers, additives and the like. Said gases frequently contain hydrocarbons.

In order to satisfy this requirement, the requirement in respect of the sintered plate is that it is readily permeable, that is to say is porous.

On the other hand, adhesion of the product to be sintered to the sintered plate during the treatment must be prevented. The presence of relatively large pores in sintered plates known from the prior art promotes such adhesion. In order to provide the products to be sintered with optimum flatness, it is important that the sintered plate is relatively smooth at the surface and has a relatively dense structure.

A further requirement which must be satisfied by sintered plates is the dimensional stability at relatively high temperature. Sintered plates are used in a temperature range of between 800 and 2000 °C.

It has been found that sintered plates can be re-used only a limited number of times. Thereafter the plates must be re-ground or machined in some other way. In general, these plates are ground plane-parallel. That is to say the material of the plates, certainly at the surface thereof, must be relatively simple to machine. A further requirement is that the surface still satisfies the abovementioned requirements after the relevant machining.

It will be understood that with the solid standard plates composed of, for example, Al₂O₃ or ZrO₂ disclosed in the prior art it is always possible only to satisfy some of the abovementioned requirements. As a consequence of the stringent specifications given above, the costs of the plate per product to be sintered are high. Furthermore, it is found that, despite everything, the dimensional stability leaves something to be desired, as a result of which the mechanical machining step described above is required after the plate has been used a few times. Such a machining step can comprise grinding and polishing, during which operation a thin layer is removed from the sintered plate. However, the consequence of this is that not only the thickness of the plate but also its weight are changed. Especially in applications in which an article to be sintered is accommodated between two sintered plates, it will be understood that the weight of the upper sintered plate is of importance for the characteristics of the product to be sintered subsequently. If the weight thereof changes, the characteristics of the product arranged between the sintered plates will also change.

It will likewise be understood that grinding and polishing cannot be repeated an unlimited number of times and that, therefore, the plates are no longer usable after they have been ground and polished a few times.

One application of sintered plates is the production of fuel cell elements. Because the aim is to join the parts thereof to form a stack containing a relatively large number of elements, stringent requirements are imposed on the reproducibility of the desired characteristics and the flatness of the elements. It will be understood that only a limited number of production runs is possible with the sintered plates described above and that thereafter new sintered plates are needed. As a result the costs of the fuel cell elements are substantially affected or raised.

British Patent Application GB 2 216 115 A describes a method in which a ceramic support, such as a sintered plate/substrate, is produced in a mould. To this end a mould release gel is first introduced into the mould and a suspension, which contains a foaming agent, is introduced on top of the gel. The foaming agent will then provide a pore structure during hardening. It has been found that a finer pore structure is produced close to the contact surface with the mould, that is to say close to the release gel layer.

If a plate produced by such a method is no longer sufficiently flat, it is necessary to replace the entire plate.

The aim of the present invention is to prevent the disadvantages described above and to provide an improved sintered plate.

According to the invention, said aim is achieved by the characterising features of Claim 1. In contrast to what has been disclosed in the abovementioned publication GB 2 216 115 A, the core of the plate is hardened in a separate step and the top layer is then applied. As a result it is possible to produce the top layer and the core either from the same material or from different materials. Furthermore, it is possible to adjust the thickness of the top layer as desired.

The invention is based on the insight that the contradictory requirements of, on the one hand, the sintered plate being porous in order to remove gases produced, and, on the other hand, the presence of a relatively dense surface in order to prevent adhesion of the product to be sintered and any influence on the surface structure thereof, are met by composing the sintered plate of two layers, according to the invention. If this plate has to be machined after it has been used a few times, this is easily possible by grinding down or polishing the top layer. Should the top layer acquire an inadequate thickness after being subjected to such a grinding treatment a few times, it is then possible to increase the thickness of the top layer again by re-applying said layer.

In this way it is possible that the plate of refractory material can be used for a particularly long period and, consequently, the costs for the production of such a plate play a minor role and said plate can comply with more stringent requirements without this having too great an effect on the cost price of the products concerned.

So as, furthermore, to give the plate of refractory material good mechanical properties and, more particularly, as far as possible to guarantee the dimensional stability during heating, it is proposed to construct the plate of refractory material as a foamed ceramic member. A foamed ceramic of this type is produced by using a plastic foam as starting material and saturating the plastic foam with a suspension of the relevant refractory material. The suspension is then heated together with the plastic foam material, during which operation the plastic foam material dissipates. A replica or copy of the plastic foam is produced as a result. Thus, it is possible accurately to determine the pore size and other structural characteristics. In this way it is simple to meet the requirements of sufficiently rapid removal of gases, on the one hand, and sufficiently good mechanical properties on the other.

It will be understood that all ceramic materials are suitable for the plate of refractory material for the sintered plate described above. However, preference is given to Al₂O₃, ZrO₂, cordierite and mullite.

The sintered plate produced using the method according to the invention is less expensive than the commercially available monolithic products and has a longer service life, as a result of which the costs per product to be sintered are further reduced.

It is also possible to produce sintered plates of relatively complex shape using the method described above.

To this end a number of plates of refractory material are first produced, optionally using the technique with plastic foam described above, and such plates are joined to one another, for example with the aid of ceramic cement. The suspension for the top layer is then applied to the component thus formed, consisting of protected plates, after which the whole is sintered.

The suspension for the top layer can be applied by any method known from the prior art. Examples are: wiping on, painting, screen printing, plate casting, injection and spraying. Each of these methods can be carried out in the conventional way. Spraying can, for example, comprise plasma spraying.

Profiling of the top layer can be produced by subjecting the top layer to a separate machining step, in which, for example, grooves or the like are made.

The invention also relates to a sintered plate/substrate obtainable using the method described above. More particularly, the invention also relates to a sintered plate/substrate to be used when heating ceramic products, comprising a plane-parallel plate of refractory material having a pore size of between 100 µm and 5 mm and a top layer having a thickness of between 0.1 and 5 mm and a pore size of between 0.1 and 10 µm applied to both sides of the plate.

A few examples of the sintered layer according to the invention are shown in the appended drawing. In the drawing:
Fig. 1 shows, in cross-section, a first embodiment of the sintered plate according to the invention;
Fig. 2 shows a second embodiment of the sintered plate according to the invention; and
Fig. 3 shows a third embodiment of the sintered plate according to the invention.

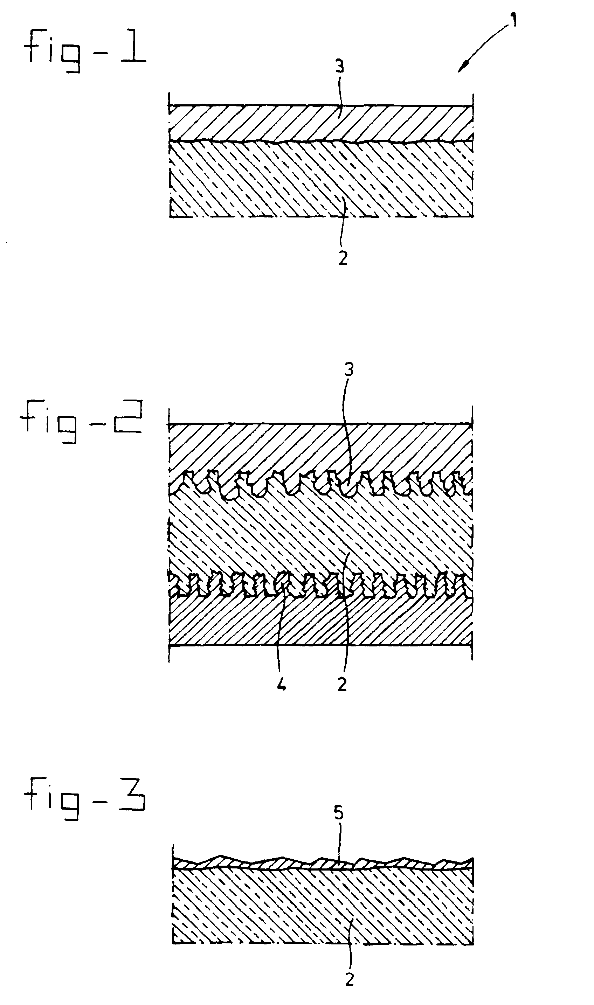

Fig. 1 shows a cross-section of a completely finished sintered plate. This sintered plate is indicated in its entirety by 1 and consists of a relatively thick plate of refractory material 2, on top of which a top layer 3 has been applied. Layer 2 has pores having a diameter of approximately 300 µm. Top layer 3 has a pore size of 3 µm. The top layer thus obtained is relatively easy to machine mechanically.

In the example shown in Fig. 1 the chemical composition of the top layer and of the refractory plate is identical. The pore size differs.

Fig. 2 shows a so-called plane-parallel embodiment of the sintered plate according to the invention. In this embodiment the refractory plate is also delimited on the underside by a top layer, indicated here by 4. The characteristics of said layer 4 correspond to those of top layer 3. It is obviously possible for these two layers to have different properties.

In the embodiment according to Fig. 2, top layer 3 is further integrated into layer 2 than is the case with the embodiment shown in Fig. 1. This is shown in a greatly exaggerated manner in Fig. 2. Fig. 3 shows the variant in which the top layer 5 has not only a different pore size and different mechanical properties but also a different composition. Moreover, layer 5 is provided with a grooved surface. This has been produced by subsequent mechanical machining.

The sintered plate described above with reference to Fig. 1 was produced as follows:
- A ceramic foam was prepared by impregnating a plastic foam with a ceramic suspension of Al₂O₃ followed by drying and sintering (1450 °C). A commercially available ceramic foam can optionally also be used.
- By means of a wiping technique (brushing), a top layer of Al₂O₃ was applied on top of the sintered ceramic foam.
- The top layer is pre-sintered on the ceramic foam at a temperature of 1500 °C.

Although a number of preferred embodiments have been described above with reference to the figures, it will be understood that numerous modifications are possible without going beyond the scope of the present application, as defined in the appended claims. In particular, mention may be made of the possibility of dense sintering of the top layer and the production of a relief in the top layer.

All manner of combinations of the embodiments shown here are possible. Moreover, it is possible to provide the sintered plate obtained with all manner of shapes, such as triangular, square, etc. Furthermore, it is possible to construct the sintered plate as a curved plate with a particular shape in order to match the shape of the product to be sintered or to impose a specific shape on the latter.

## Claims

1. Method for the production of a sintered plate/substrate to be used when heating ceramic products, comprising the provision of a plate of refractory material, characterised in that the plate of refractory material is produced in such a way that the pore size is between 100 µm and 5 mm which plate is sintered and in that subsequently a top layer of a further refractory material having a thickness of between 0.1 and 5 mm and a pore size of between 0.1 and 10 µm is introduced onto or into the refractory material.

2. Method according to Claim 1, wherein the production of the refractory plate comprises the provision of a suspension, the incorporation thereof in a plastic foam and firing of the foam after drying of the suspension.

3. Method according to Claim 1 or 2, wherein the deposition of the top layer comprises the application of a suspension onto the ceramic plate, followed by heating thereof.

4. Method according to Claim 1 or 2, wherein the deposition of the top layer comprises the application of the top layer onto the ceramic plate by means of plasma/flame spraying and/or by means of powder coating.

5. Method according to one of the preceding claims, wherein, following the production of the top layer, the latter is subjected to mechanical machining.

6. Method for the production of a sintered plate/substrate assembly to be used when heating ceramic products, comprising the production of a number of sintered plates/substrates according to one of the preceding claims, joining said plates to one another to form a plate assembly and applying said top layer thereon.

7. Method according to Claim 6, wherein the joining of said plates to one another comprises the use of ceramic cement.

8. Method for refurbishing a sintered plate/substrate produced with the method according to one of the preceding claims to be used when heating ceramic products, which sintered plate comprises a plate of refractory material having a pore size of between 100 pm and 5 mm and a top layer having a pore size of between 0.05 and 10 µm applied at least on one side thereof, comprising the at least partial removal of the top layer and the application of a new top layer having a minimum thickness of 0.1 mm and a pore size of between 0.05 and 10 µm, followed by mechanical machining thereof.

9. Method according to Claim 8, wherein the plate of refractory material is provided with profiling and the top layer is applied in the green, deformable state in such a way that said top layer at least partially follows the exposed surface of said profiling.

10. Sintered plate obtainable using the method according to one of the preceding claims.

11. Sintered plate/substrate to be used when heating ceramic products, comprising a plane-parallel sintered plate of refractory material, having a pore size of between 100 µm and 5 mm, wherein a top layer having a thickness of between 0.1 and 5 mm and a pore size of between 0.1 and 10 µm is applied to both sides of the plate.

12. Sintered plate/substrate according to Claim 11, wherein the plate of refractory material comprises a foamed ceramic member.

13. Sintered plate/substrate according to Claim 11 or 12, wherein the plate of refractory material comprises Al₂O₃ or ZrO₂.

14. Sintered plate/substrate according to one of the preceding Claims 11-13, wherein the top layer comprises Al₂O₃, ZrO₂, cordierite or mullite.

15. Sintered plate/substrate according to one of the preceding Claims 11-14, wherein the top layer is provided with profiling.

## Patentansprüche

1. Verfahren zum Herstellen einer Sinterplatte/Substrat, die beim Erhitzen von keramischen Erzeugnissen eingesetzt wird, das das Bereitstellen einer Platte aus feuerfestem Material umfasst, **dadurch gekennzeichnet,** dass die Platte aus feuerfestem Material so hergestellt wird, dass die Porengröße zwischen 100 µm und 5 mm liegt, wobei die Platte gesintert wird, und dass anschließend eine Oberschicht aus einem weiteren feuerfesten Material mit einer Dicke zwischen 0,1 und 5 mm und einer Porengröße zwischen 0,1 und 10 µm auf bzw. in das feuerfeste Material gebracht wird.

2. Verfahren nach Anspruch 1, wobei die Herstellung der feuerfesten Platte das Bereitstellen einer Suspension, das Einbetten derselben in einen Kunststoffschaum und das Brennen des Schaumstoffs nach dem Trocknen der Suspension umfasst.

3. Verfahren nach Anspruch 1 oder 2, wobei das Aufbringen der Oberschicht das Auftragen einer Suspension auf die Keramikplatte und das anschließende Erhitzen derselben umfasst.

4. Verfahren nach Anspruch 1 oder 2, wobei das Aufbringen der Oberschicht das Auftragen der Oberschicht auf die Keramikplatte mittels Plasma-/Flammspritzen und/oder mittels Pulverbeschichtung umfasst.

5. Verfahren nach einem der vorangehenden Ansprüche, wobei nach der Herstellung der Oberschicht letztere mechanischer Bearbeitung unterzogen wird.

6. Verfahren zum Herstellen einer Sinterplatte/Substrat-Baugruppe, die beim Erhitzen keramischer Erzeugnisse eingesetzt wird, das die Herstellung einer Reihe gesinterter Platten/Substrate nach einem der vorangehenden Ansprüche, das Verbinden der Platten miteinander, um eine Plattenbaugruppe herzustellen, und das Auftragen der Oberschicht darauf umfasst.

7. Verfahren nach Anspruch 6, wobei das Verbinden der Platten miteinander den Einsatz eines Keramikklebstoffs umfasst.

8. Verfahren zum Auffrischen einer Sinterplatte/Substrat, die mit dem Verfahren nach einem der vorangehenden Ansprüche hergestellt wurde und zum Erhitzen von keramischen Erzeugnissen eingesetzt wird, wobei die Sinterplatte eine Platte aus feuerfestem Material mit einer Porengröße zwischen 100 µm und 5 mm und eine Oberschicht mit einer Porengröße zwischen 0,05 und 10 µm umfasst, die wenigstens auf eine Seite derselben aufgetragen wird, das das wenigstens teilweise Entfernen der Oberschicht und das Auftragen einer neuen Oberschicht mit einer minimalen Dicke von 0,1 mm und einer Porengröße zwischen 0,05 und 10 µm und anschließendes mechanisches Bearbeiten derselben umfasst.

9. Verfahren nach Anspruch 8, wobei die Platte aus feuerfestem Material mit Profil versehen wird und die Oberschicht im ungebrannten verformbaren Zustand so aufgetragen wird, dass die Oberschicht wenigstens teilweise der freiliegenden Fläche des Profils folgt.

10. Sinterplatte, die unter Verwendung des Verfahrens nach einem der vorangehenden Ansprüche hergestellt werden kann.

11. Sinterplatte/Substrat, die beim Erhitzen keramischer Erzeugnisse eingesetzt wird, und die eine planparallele Sinterplatte aus feuerfestem Material mit einer Porengröße zwischen 100 µm und 5 mm umfasst, wobei eine Oberschicht mit einer Dicke zwischen 0,1 und 5 mm und einer Porengröße zwischen 0,1 und 10 µm auf beide Seiten der Platte aufgetragen wird.

12. Sinterplatte/Substrat nach Anspruch 11, wobei die Platte aus feuerfestem Material ein verschäumtes keramisches Element umfasst.

13. Sinterplatte/Substrat nach Anspruch 11 oder 12, wobei die Platte aus feuerfestem Material Al₂O₃ oder ZrO₂ umfasst.

14. Sinterplatte/Substrat nach einem der vorangehenden Ansprüche 11-13, wobei die Oberschicht Al₂O₃, ZrO₂, Cordierit oder Mullit umfasst.

15. Sinterplatte/Substrat nach einem der vorangehenden Ansprüche 11-14, wobei die Oberschicht mit Profil versehen ist.

## Revendications

1. Procédé pour produire une plaque / un support fritté(e)e à utiliser lors du chauffage de produits en céramique, comprenant la fourniture d'une plaque en matière réfractaire, caractérisé en ce que la plaque en matière réfractaire est produite de telle manière que la grosseur des pores est comprise entre 100 µm et 5 mm, la plaque étant fritté(e)e, et en ce qu'ensuite une couche supérieure constituée également d'une matière réfractaire ayant une épaisseur comprise entre 0,1 et 5 mm et une grosseur de pores comprise entre 0,1 et 10 µm est introduite sur ou dans la matière réfractaire.

2. Procédé selon la revendication 1, dans lequel la production de la plaque réfractaire comprend la fourniture d'une suspension, qui est incorporée dans une matière plastique mousse, et la cuisson de la mousse après séchage de la suspension.

3. Procédé selon la revendication 1 ou 2, dans lequel la pose de la couche supérieure comprend l'application d'une suspension sur la plaque en céramique puis le chauffage de celle-ci.

4. Procédé selon la revendication 1 ou 2, dans lequel la pose de la couche supérieure comprend l'application de la couche supérieure sur la plaque en céramique au moyen d'un pistolet pulvérisateur au plasma ou d'un pistolet à flamme et/ou par revêtement par poudre.

5. Procédé selon l'une quelconque des revendications précédentes, dans lequel, après la production de la couche supérieure, celle-ci est soumise à un usinage mécanique.

6. Procédé pour produire un ensemble de plaque / un support fritté(e)e à utiliser lors du chauffage de produits en céramique, comprenant la production d'un certain nombre de plaques / supports fritté(e)s selon l'une quelconque des revendications précédentes et l'assemblage desdites plaques les unes aux autres pour former un ensemble de plaques sur lequel ladite couche supérieure est appliquée.

7. Procédé selon la revendication 6, dans lequel l'assemblage desdites plaques les unes aux autres comprend l'utilisation d'un ciment pour céramique.

8. Procédé pour raviver une plaque / un support fritté(e)e produite par le procédé selon l'une quelconque des revendications précédentes à utiliser lors du chauffage de produits en céramique, ladite plaque fritté(e)e comprenant une plaque en matière réfractaire ayant une grosseur de pores comprise entre 100 µm et 5 mm et une couche supérieure ayant une grosseur de pores comprise entre 0,05 et 10 µm appliquée au moins sur un côté de la plaque, comprenant l'enlèvement au moins partiel de la couche supérieure et l'application d'une nouvelle couche supérieure ayant une épaisseur minimum de 0,1 mm et une grosseur de pores comprise entre 0,05 et 10 µm, suivi d'un usinage mécanique de ladite couche supérieure.

9. Procédé selon la revendication 8, dans lequel la plaque en matière réfractaire est pourvue d'un profilage et la couche supérieure est appliquée en état vert, déformable de telle manière que ladite couche supérieure suive au moins partiellement la surface exposée dudit profilage.

10. Plaque fritté(e) pouvant être obtenue en utilisant le procédé selon l'une quelconque des revendications précédentes.

11. Plaque / support fritté(e) à utiliser lors du chauffage de produits en céramique, comprenant une plaque fritté(e)e à faces planes et parallèles constituée d'une matière réfractaire, ayant une grosseur de pores comprise entre 100 µm et 5 mm, où une couche supérieure ayant une épaisseur comprise entre 0,1 et 5 mm et une grosseur de pores comprise entre 0,1 et 10 µm est appliquée des deux côtés de la plaque.

12. Plaque / support fritté(e) selon la revendication 11, dans laquelle / lequel la plaque en matière réfractaire comprend un élément en céramique mousse.

13. Plaque / support fritté(e) selon la revendication 11 ou 12, dans laquelle / lequel la plaque en matière réfractaire comprend du Al₂O₃ ou du ZrO₂.

14. Plaque / support fritté(e) selon l'une quelconque des revendications précédentes 11 à 13, dans laquelle / lequel la couche supérieure comprend du Al₂O₃ ou du ZrO₂, de la cordiérite ou de la mullite.

15. Plaque / support fritté(e) selon l'une quelconque des revendications précédentes 11 à 14, dans laquelle / lequel la couche supérieure est pourvue d'un profilage.
